(19) **Europäisches Patentamt**

**European Patent Office**

**Office européen des brevets**

(11) **EP 1 279 976 B1**

(12) **EUROPEAN PATENT SPECIFICATION**

(45) Date of publication and mention
of the grant of the patent:
**29.09.2004  Bulletin 2004/40**

(51) Int Cl.[7]: **G02B 6/16**, G02B 1/04

(21) Application number: **02015640.2**

(22) Date of filing: **16.07.2002**

(54) **Plastic optical fiber and process for its production**

Optische Kunststofffaser und ihr Herstellungsprozess

Fibre optique en matière plastique et son procédé de fabrication

(84) Designated Contracting States:
**AT BE BG CH CY CZ DE DK EE ES FI FR GB GR
IE IT LI LU MC NL PT SE SK TR**

(30) Priority: **18.07.2001  JP 2001218380**

(43) Date of publication of application:
**29.01.2003  Bulletin 2003/05**

(73) Proprietor: **ASAHI GLASS COMPANY LTD.
Tokyo 100-8405 (JP)**

(72) Inventors:
 • **Sugiyama, Norihide, Asahi Glass Company, Ltd.
   Yokohama-shi, Kanagawa (JP)**
 • **Naritomi, Masaki, Asahi Glass Company, Ltd.
   Chiyoda-ku, Tokyo (JP)**

(74) Representative: **Müller-Boré & Partner
Patentanwälte
Grafinger Strasse 2
81671 München (DE)**

(56) References cited:
**EP-A- 0 375 178        EP-A- 0 615 141
EP-A- 0 862 070        FR-A- 2 657 556
US-A- 4 968 116        US-A- 5 223 593
US-A- 5 478 907        US-A1- 2001 004 656**

**Description**

The present invention relates to a plastic optical fiber for communications with a high bandwidth, of which the propagation mode is a single mode (hereinafter referred to as "SM"), and a process for its production. More particularly, it relates to a plastic optical fiber for communications with a high bandwidth, which has transparency, heat resistance, moisture resistance, water proof, chemical resistance, non-flammability and flexibility all together and which is suitable particularly for e.g. plant wirings or wirings for sewage systems which are required to have chemical resistance, and of which the propagation mode is SM, and a process for its production.

Heretofore, as SM optical fibers, those made of glass have been known and have been practically used for large capacity long distance trunk line systems. In recent years, along with widespread use of internet and digitization of communication systems, it has become important to introduce optical fibers not only to relay networks connecting communication service centers but also to subscriber line networks connecting offices and homes. However, optical fibers made of glass are poor in flexibility and thus difficult to handle, and their connection requires special skills. US-A-5 223 593 describes a plastic optical fiber which comprises a core made of an amorphous core fluoropolymer having reduced C-H bonds, and a clad made of a clad fluoropolymer having a refractive index lower by at least 0.01 than the core fluoropolymer. This fiber appears not to be a single mode fiber in the near infrared.

Under the circumstances, JP-A-5-241036 proposes SM type optical fibers employing acrylic resin plastic fibers which are excellent in flexibility and easy to handle. However, acrylic resins represented by methyl methacrylate resins, or polystyrene resins, have an attenuation loss by vibrational absorption attributable to C-H bonds, whereby light to be used for communications is restricted to visible light. Thus, near infrared light of e.g. 850 nm or 1,300 nm which is commonly used for communications, can not be used. Further, a theoretical attenuation loss is substantial, and the transmission distance is substantially limited to a level of at most 100 m, whereby such fibers cannot be used for establishing a network connecting buildings or floors.

Whereas, JP-A-8-5848 discloses that a graded index (hereinafter referred to as "GI") optical fiber is produced by using a non-crystalline fluoropolymer having no C-H bond in its molecule, and the obtained optical fiber has a low attenuation loss to lights within a wide wavelength range from ultraviolet lights to near infrared lights. Further, a step index (hereinafter referred to as "SI") optical fiber employing a non-crystalline fluoropolymer having no C-H bond in its molecule, is disclosed in e.g. JP-A-4-1704.

Such GI optical fiber is known to provide a large transmission capacity due to a high bandwidth as compared with the SI optical fiber. With respect to the GI optical fiber made of a non-crystalline fluoropolymer having no C-H bond, one at a level of 300 MHz·km has been developed by controlling the refractive index distribution, and theoretically, it may have a performance exceeding 10 GHz·km. However, a GI optical fiber having such high performance has not yet been realized.

On the other hand, the SM optical fiber is theoretically useful in a higher bandwidth than the GI optical fiber, and it is practically used as a glass optical fiber, but a SM optical fiber made of a non-crystalline fluoropolymer having no C-H bond, has not been prepared.

It is an object of the present invention to provide a SM plastic optical fiber which is easy to handle and safe (the optical fiber will not break or stick) and can be connected at a low cost and which can be laid for a short distance at a level of from a few hundreds meters to a few kilometers and has a large transmission capacity due to a high bandwidth and a low attenuation loss, and a process for its production.

Further, it is another object of the present invention to provide a SM plastic optical fiber which can be mutually connected with a SM optical fiber made of glass, and a process for its production.

Still further, it is an object of the present invention to provide a SM plastic optical fiber which has transparency, heat resistance, moisture resistance, water proof, chemical resistance, non-flammability and flexibility all together and which is particularly suitable for plant wirings or wirings for sewage systems which are required to have chemical resistance.

The present inventors have conducted an extensive study in view of the above-mentioned problems and as a result, have found that the propagation mode of a plastic optical fiber can be made to be a single mode by controlling the core diameter and the difference in the refractive index between the core and the clad, of a plastic optical fiber, by using specific fluoropolymers, and the present invention has been accomplished on the basis of this discovery.

The present invention provides a plastic optical fiber acording to claim 1.

It is preferred that each of the core and clad fluoropolymers is a fluoropolymer having substantially no C-H bond and having a fluorine-containing aliphatic cyclic structure in its main chain.

Further, the present invention provides a process for producing a plastic optical fiber according to claims 1 to 7, which comprises melting the clad fluoropolymer in a cylindrical container, injecting the core fluoropolymer to a center axis portion of the melt of the clad fluoropolymer, followed by cooling, or preparing a hollow cylinder of the clad fluoropolymer, followed by inserting the core fluoropolymer, to form a preform, and further subjecting this preform to melt spinning.

Still further, the present invention provides a process for producing a plastic optical fiber according to claims 1 to 7, which comprises melt spinning by extrusion so that the core fluoropolymer is disposed at the center and the clad fluoropolymer is disposed concentrically to surround it.

According to the present invention, it is possible to provide a SM plastic optical fiber which is easy to handle and safe (the optical fiber will not break or stick) and can be connected at a low cost, and which can be laid in a short distance and has a large transmission capacity due to a high bandwidth and a low attenuation loss, and a process for its production.

Further, the SM plastic optical fiber of the present invention can be connected with a SM optical fiber made of glass.

Further, the SM plastic optical fiber of the present invention has transparency, heat resistance, moisture resistance, water proof, chemical resistance, non-flammability and flexibility all together and can be suitably used under severe conditions for e.g. plant wirings or sewage wirings where chemical resistance is particularly required.

Now, the present invention will be described in detail with reference to the preferred embodiments.

The plastic optical fiber of the present invention is a plastic optical fiber comprising a core made of a non-crystalline core fluoropolymer having substantially no C-H bond and a clad made of a clad fluoropolymer having a refractive index lower by at least 0.001 than the core fluoropolymer, and of which the propagation mode is a single mode.

In the present invention, the refractive index is meant for a refractive index to sodium D line.

In the present invention, the core fluoropolymer is not particularly limited, so long as it is a fluoropolymer which is non-crystalline and which has substantially no C-H bond attributable to light absorption of near infrared light. However, a fluoropolymer having a fluorine-containing aliphatic cyclic structure in its main chain, is preferred. In the present invention, the clad fluoropolymer is preferably a fluoropolymer which is non-crystalline and which has substantially no C-H bond causing light absorption of near infrared light. Namely, the clad fluoropolymer is preferably a fluoropolymer of the same type as the core fluoropolymer so long as it has a refractive index lower than the core fluoropolymer to be combined. As the clad fluoropolymer, particularly preferred is a fluoropolymer having a fluorine-containing aliphatic cyclic structure in its main chain. Further, each of the core and clad fluoropolymers is a polymer having a melt-moldability and is usually a substantially linear polymer.

Now, firstly, the fluoropolymer which is non-crystalline and has substantially no C-H bond causing light absorption of near infrared light, and which has a fluorine-containing aliphatic cyclic structure in its main chain, will be described. It is preferred to use two types of fluoropolymers selected from such fluoropolymers and having different refractive indices, as the core and clad fluoropolymers, respectively.

The fluoropolymer having a fluorine-containing aliphatic cyclic structure in its main chain, is a fluoropolymer having a main chain made of a chain of carbon atoms and having a fluorine-containing aliphatic cyclic structure in the main chain. "Having a fluorine-containing aliphatic cyclic structure in its main chain" is meant for having a structure wherein at least one carbon atom constituting an aliphatic ring is a carbon atom in the carbon chain constituting the main chain, and a fluorine atom or a fluorine-containing group is bonded to at least part of carbon atoms constituting the aliphatic ring. As the fluorine-containing aliphatic cyclic structure, a fluorine-containing aliphatic ether cyclic structure is more preferred.

The viscosity of the fluoropolymer in a molten state is preferably from $1 \times 20^2$ to $1 \times 10^5$ Pa·s at a melting temperature of from 200 to 300°C. If the melt viscosity is too high, melt spinning is difficult, and if the melt viscosity is too low, the polymer softens when exposed at a high temperature to form a cable by applying a protective coating, whereby the light transmitting performance deteriorates.

The number average molecular weight of the fluoropolymer is preferably from $1 \times 10^4$ to $5 \times 10^6$, more preferably from $5 \times 10^4$ to $1 \times 10^6$. If the molecular weight is too small, the heat resistance may be impaired, and if it is too large, molding or melt extrusion of the preform tends to be difficult. When this molecular weight is represented by the intrinsic viscosity [η], it is preferably from 0.1 to 1 dℓ/g, particularly preferably from 0.2 to 0.5 dℓ/g, at 30°C in perfluoro(2-butyltetrahydrofuran) (hereinafter referred to as "PBTHF").

The polymer having a fluorine-containing aliphatic cyclic structure, is preferably a polymer obtained by polymerizing a monomer having a fluorine-containing aliphatic cyclic structure (a monomer having a polymerizable double bond between a carbon atom constituting a ring and a carbon atom not constituting a ring, or a monomer having a polymerizable double bond between two carbon atoms constituting a ring), or a polymer having a fluorine-containing aliphatic cyclic structure in its main chain, obtained by cyclic polymerization of a fluoromonomer having at least two polymerizable double bonds. The above-mentioned monomer having a fluorine-containing aliphatic cyclic structure is preferably a monomer having one polymerizable double bond. And the above cyclic polymerizable fluorine-containing monomer is preferably a monomer having two polymerizable double bonds and having no fluorine-containing aliphatic cyclic structure.

In this invention, a monomer which is copolymerizable with above-mentioned monomers, excluding both the monomer having a fluorine-containing aliphatic cyclic structure and the cyclic polymerizable fluorine-containing monomer, is referred to as "other radical polymerizable monomer".

The carbon atoms constituting the main chain of the fluoropolymer are constituted by two carbon atoms of the polymerizable double bond of a monomer. Accordingly, in a monomer having a fluorine-containing aliphatic cyclic structure having one polymerizable double bond, one or both of the two carbon atoms constituting the polymerizable double bond will be atoms constituting the aliphatic ring. With the fluoromonomer having no aliphatic ring and having two polymerizable double bonds, one carbon atom of one polymerizable double bond and one carbon atom of the other polymerizable double bond will bond to form a ring. An aliphatic ring is formed by the bonded two carbon atoms and atoms present between them (excluding atoms in a side chain), and in a case where an etheric oxygen atom is present between the two polymerizable double bonds, a fluorine-containing aliphatic ether cyclic structure will be formed.

The polymer having a fluorine-containing aliphatic cyclic structure in its main chain, obtainable by polymerization of a monomer having a fluorine-containing aliphatic cyclic structure, can be obtained by homopolymerizing a monomer having a fluorine-containing aliphatic cyclic structure, such as perfluoro (2,2-dimethyl-1,3-dioxol), perfluoro(4-methyl-2-methylene-1,3-dioxolane) or perfluoro(2-methyl-1,4-dioxine). Further, a polymer having a fluorine-containing aliphatic cyclic structure in its main chain, obtained by copolymerizing such a monomer with the other radical polymerizable monomer containing no C-H bond, may also be employed. If the proportion of polymerized units of the other radical polymerizable monomer increases, the light transmittance of the fluoropolymer may decrease. Accordingly, the fluoropolymer is preferably a homopolymer of a monomer having a fluorine-containing aliphatic cyclic structure, or a copolymer wherein the proportion of polymerized units of such a monomer, is at least 70 mol%. The other radical polymerizable monomer containing no C-H bond, may, for example, be tetrafluoroethylene or chlorotrifluoroethylene. As a commercially available non-crystalline fluoropolymer having substantially no C-H bond, of this type, "Teflon AF" (manufactured by Du Pont) or "Hiflon AD" (manufactured by Ausimont) may, for example, be mentioned.

Further, the polymer having a fluorine-containing aliphatic cyclic structure in its main chain, obtainable by cyclic polymerization of a fluorine-containing monomer having at least two polymerizable double bonds, is known, for example, in JP-A-63-238111 or JP-A-63-238115. Namely, a polymer having a fluorine-containing aliphatic cyclic structure in its main chain, can be obtained by cyclic polymerization of a monomer such as perfluoro(3-oxa-1,5-hexadiene) or perfluoro(3-oxa-1,6-heptadiene), or by copolymerizing such a monomer with the other radical polymerizable monomer containing no C-H bond such as tetrafluoroethylene, chlorotrifluoroethylene or perfluoro(methyl vinyl ether). As a fluorine-containing monomer having at least two polymerizable double bonds other than the above, perfluoro (4-methyl-3-oxa-1,6-heptadiene) or perfluoro(5-methyl-3-oxa-1,6-heptadiene) may, for example, be also preferred. If the proportion of polymerized units of the other radical polymerizable monomer increases, the light transmittance of the fluoropolymer may decrease. Accordingly, as the fluoropolymer, a homopolymer of a fluoromonomer having at least two polymerizable double bonds, or a copolymer wherein the proportion of polymerized units of such a monomer is at least 40 mol%, is preferred. As a commercially available non-crystalline fluoropolymer having substantially no C-H bond, of such a type, "Cytop" (manufactured by Asahi Glass Company, Limited) may be mentioned.

Further, the fluoropolymer having a fluorine-containing aliphatic cyclic structure in its main chain, may also be obtained by copolymerizing a monomer having a fluorine-containing aliphatic cyclic structure such as perfluoro(2,2-dimethyl-1,3-dioxol) with a fluorine-containing monomer having at least two polymerizable double bonds such as perfluoro(3-oxa-1,5-hexadiene) or perfluoro(3-oxa-1,6-heptadiene). Also in such a case, the light transmittance may decrease depending upon the combination. Accordingly, a copolymer wherein the proportion of polymerized units of the fluoromonomer having at least two polymerizable double bonds, is at least 30 mol%, is preferred.

The polymer having a fluorine-containing aliphatic cyclic structure is preferably one containing at least 20 mol%, particularly preferably at least 40 mol%, of polymerized units having a fluorine-containing aliphatic cyclic structure, based on the total polymerized units of the polymer having a fluorine-containing aliphatic cyclic structure, from the viewpoint of transparency, mechanical properties, etc.

Further, the polymer having a fluorine-containing aliphatic cyclic structure is preferably a perfluoropolymer. Namely, it is preferably a polymer wherein all of hydrogen atoms bonded to carbon atoms are substituted by fluorine atoms. However, some of fluorine atoms in the perfluoropolymer may be substituted by atoms other than hydrogen atoms, such as chlorine atoms or deuterium atoms. The presence of chlorine atoms is effective to increase the refractive index of the polymer. Accordingly, a polymer having chlorine atoms may be used particularly as the core fluoropolymer.

The clad fluoropolymer is used as a clad material, and its refractive index is required to be lower by at least 0.001 than the core fluoropolymer. Further, the allowance for the required performance of light transmittance of the clad fluoropolymer is larger than the core fluoropolymer, and accordingly, the clad fluoropolymer may have a small amount of hydrogen atoms. However, the presence of hydrogen atoms may cause absorption of transmitted light, and as compared with fluorine atoms, the presence of hydrogen atoms tends to increase the refractive index of the polymer. For such reasons, the clad fluoropolymer is preferably a polymer having substantially no hydrogen atom. Further, for example, the proportion of polymerized units having a fluorine-containing aliphatic cyclic structure, based on the total polymerized units of the polymer having a fluorine-containing aliphatic cyclic structure, may sufficiently be at a level of 20 mol%. Whereas, in the case of core fluoropolymer such a proportion is preferably at least 40 mol%. For example, in a case where the clad fluoropolymer is a copolymer of a monomer having a fluorine-containing aliphatic cyclic structure with another radical polymerizable monomer, the proportion of polymerized units of a monomer having a fluorine-containing aliphatic cyclic structure, in the clad fluoropolymer, may be small and may sufficiently be useful even at a level of 30 mol%.

In the present invention, each of the core and clad fluoropolymers is preferably the above-described fluoropolymer having a fluorine-containing aliphatic cyclic structure in its main chain, but is not limited to such a fluoropolymer. For example, it is possible to use a non-crystalline fluoropolymer having substantially no C-H bond and having a fluorine-containing cyclic structure other than the fluorine-containing aliphatic cyclic structure, in its main chain, as disclosed in the above-mentioned JP-A-8-5848. Specifically, it is possible to use a non-crystalline fluoropolymer having in its main chain a fluorine-containing cyclic structure such as a fluorine-containing imide ring structure, a fluorine-containing triazine ring structure or a fluorine-containing aromatic ring structure. The melt viscosity and the number average molecular weight of such a polymer are preferably within the ranges equivalent to the above-mentioned melt viscosity and the number average molecular weight of the fluoropolymer having a fluorine-containing aliphatic cyclic structure in its main chain.

In the optical fiber of the present invention, the core and the clad are made of plastic materials (fluoropolymers). Accordingly, the core will not break like an optical fiber made of glass, or the core at the end of the optical fiber will not stick and is safe.

Further, as fluoropolymers are used for the core and the clad, the optical fiber has transparency, heat resistance, moisture resistance, water proof, chemical resistance, non-flammability and flexibility all together, and such an optical fiber can be preferably employed particularly for e.g. plant wirings or sewage wirings which are required to have chemical resistance. Further, the optical fiber has flexibility, etc. and is easy to handle and connect, and such an optical fiber can suitably be employed for establishing of a subscriber line network connecting offices or homes, or a network connecting buildings or floors.

The plastic optical fiber of the present invention is a plastic optical fiber, of which the propagation mode is a single mode.

The conditions for the single mode may be represented by the formula (1) by means of parameters so-called normalized frequency V:

$$V = \frac{2\pi a}{\lambda} \sqrt{n_1{}^2 - n_2{}^2} < 2.405 \qquad (1)$$

where a is the core radius, $n_1$ is the refractive index of the core center, $n_2$ is the refractive index of the clad, and $\lambda$ is the wavelength.

A SM plastic optical fiber of the present invention comprises a core made of a core fluoropolymer and a clad made of a clad fluoropolymer having a refractive index lower by at least 0.001 than the core fluoropolymer. In such a case, with respect to the relation of the refractive indices $n_1$ and $n_2$ of the core and clad fluoropolymers required to satisfy the formula (1), $\Delta n = n_1 - n_2$ is preferably within a range of $0.001 \leqq \Delta n < 0.01$.

If $\Delta n$ is smaller than this, light can not be sealed in, and the bending loss tends to increase. On the other hand, if it is larger than this, the core diameter must be made very small in order to satisfy the SM conditions, and it becomes difficult to let light enter.

By controlling the core diameter of the plastic optical fiber and the difference of the refractive indices of the core and the clad so that the propagation mode of the plastic optical fiber is made to be a single mode, it is possible to realize a low attenuation loss with a large transmission capacity due to a high bandwidth. Further, since the propagation mode is the same, the mutual connection with a SM optical fiber made of glass will be possible.

The diameter of the SM plastic optical fiber of the present invention is preferably at least 20 $\mu$m, more preferably at least 50 $\mu$m. If the diameter is too small, the handling in e.g. connection, tends to be difficult, and it tends to be difficult to make the propagation mode to be a single mode. There is no particular upper limit in the diameter. However, if the diameter is too large, the cost for material increases, and the economical efficiency lowers. Taking the economical efficiency, etc., into account, the upper limit is preferably about 800 $\mu$m. Particularly preferably, the diameter of the fiber is from 100 to 800 $\mu$m.

The plastic optical fiber of the present invention can be produced by processes which will be described hereinafter.

Further, with respect to the applications, the plastic optical fiber of the present invention can be used for laying for a short distance of from about a few hundreds meters to a few kilometers or for connection (a branch line) to a glass SM optical fiber or under severe conditions for use, and it is used particularly suitably for laying for a short distance.

As the process for producing the SM plastic optical fiber of the present invention, (A) a process of molding a preform and then subjecting the preform to melt spinning, or (B) a process of melt spinning by means of an extrusion molding machine, may be employed. In each case, it is possible to directly preparing it from the polymers or mold it while polymerizing the monomers.

A preform may be formed by melting the clad fluoropolymer in a cylindrical container, injecting the core fluoropolymer into a center axis portion of the melt of the clad fluoropolymer, followed by cooling. Further, a preform may also be formed by preparing a hollow cylinder of the clad fluoropolymer by melt molding etc., followed by inserting the core fluoropolymer. Further, a hollow cylinder of the clad fluoropolymer may be formed by bulk polymerization of a monomer of the clad fluoropolymer. As a method of inserting the core fluoropolymer into the hollow cylinder of the clad fluoropolymer, injecting the core fluoropolymer in a molten state, inserting the core fluoropolymer molded in a rod shape, or filling the monomer of the core fluoropolymer, followed by bulk polymerization, may be employed.

As a method for melt spinning from the above-mentioned preform, the following method may be employed. While inserting the preform into a cylindrical heating furnace at a constant speed of $v_1$, it is melted from the forward end, made into a slender fiber shape and withdrawn at a constant speed $v_2$ to obtain a fiber having a predetermined diameter. The relation of $v_1$ and $v_2$ will be

$$\frac{r_2}{r_1} = \sqrt{\frac{v_1}{v_2}} \qquad (2)$$

where $r_1$ is the core diameter of the initial preform, and $r_2$ is the core diameter of the fiber, since the volume is constant as represented by $v_1 \pi r_1^2 = v_2 \pi r_2^2$. Accordingly, the core/clad ratio is determined by the core/clad ratio of the preform, and if the core diameter is changed, the clad diameter will also be changed, whereby freedom in design will be limited.

On the other hand, by the method of melt spinning by means of an extrusion molding machine, it is possible to produce a fiber having an optional size by changing the rotational speed of the screw or the size of the nozzle, and continuous production is possible, whereby the productivity is good. However, the method may be a combination of both, i.e. the preform may be produced by extrusion, followed by melt spinning.

Now, the present invention will be described in further detail with reference to specific Examples. However, it should be understood that the present invention is by no means restricted to such specific Examples.

PREPARATION EXAMPLE 1

30 g of perfluoro(3-oxa-1,6-heptadiene) (hereinafter referred to as "PBVE"), 150 g of deionized water, 10 g of methanol and 0.15 g of diisopropylperoxydicarbonate as a polymerization initiator, were charged into an autoclave made of pressure resistant glass and having an internal capacity of 200 m$\ell$. The interior of the system was flushed three times with nitrogen, whereupon suspension polymerization was carried out at 40°C for two hours. The resulted polymer was stabilized by fluorination, followed by purification. As a result, 26 g of a purified polymer (hereinafter referred to as "polymer A") was obtained. The intrinsic viscosity [η] of polymer A was 0.24 at 30°C in PBTHF. The glass transition temperature of polymer A as measured by differential scanning calorimetry (hereinafter referred to as "DSC") was 108°C, and it was a transparent glassy polymer which was tough at room temperature. Further, the 10% heat decomposition temperature was 468°C, and the refractive index was 1.342.

PREPARATION EXAMPLE 2

27 g of PBVE, 3 g of perfluoro(2,2-dimethyl-1,3-dioxol) (hereinafter referred to as "PDD"), 150 g of deionized water, 10 g of methanol and 0.15 g of diisopropylperoxydicarbonate, were charged into an autoclave made of pressure resistant glass and having an internal capacity of 200 m$\ell$. The interior of the system was flushed three times with nitrogen, whereupon suspension polymerization was carried out at 40°C for 22 hours. The resulted polymer was stabilized by fluorination, followed by purification. As a result, 27 g of a purified polymer (hereinafter referred to as "polymer B") was obtained.

The intrinsic viscosity [η] of polymer B was 0.25 at 30°C in PBTHF. From the analysis of the IR spectrum, the content of repeating units (hereinafter referred to as "PDD polymerized units", the same applies hereinafter) formed by the polymerization reaction of PDD, was 10 mol%. The glass transition temperature of polymer B as measured by DSC was 115°C, and it was a transparent glassy polymer which was tough at room temperature. Further, the 10% heat decomposition temperature was 465°C, and the refractive index was 1.337.

PREPARATION EXAMPLE 3

20 g of PBVE, 10 g of tetrafluoroethylene (hereinafter referred to as "TFE"), 30 g of dichloropentafluoropropane (hereinafter referred to as "R225") and 30 mg of perfluorobenzoyl peroxide, were charged into an autoclave made of stainless steel and having an internal capacity of 200 m$\ell$. The interior of the system was frozen in liquid nitrogen, vacuum-deaerated, whereupon solution polymerization was carried out at 70°C for 20 hours, followed by purification. As a result, 25 g of a purified polymer (hereinafter referred to as "polymer C") was obtained.

The intrinsic viscosity [η] of polymer C was 0.27 at 30°C in PBTHF. From the analysis of the NMR spectrum, the molar ratio of PBVE polymerized units: TFE polymerized units was 46:54. The glass transition temperature of polymer C as measured by DSC, was 82°C, and it was a transparent glassy polymer which was tough at room temperature. Further, the 10% heat decomposition temperature was 468°C, and the refractive index was 1.338.

PREPARATION EXAMPLE 4

22 g of PBVE, 8 g of perfluoro(2-methylene-4-methyl-1,3-dioxolane) (hereinafter referred to as "PMMD"), 150 g of deionized water, 10 g of methanol and 0.15 g of diisopropylperoxydicarbonate, were charged into an autoclave made of pressure resistant glass and having an internal capacity of 200 m$\ell$. The interior of the system was flushed three times with nitrogen, whereupon suspension polymerization was carried out at 40°C for 22 hours. The resulted polymer was stabilized by fluorination, followed by purification. As a result, 26.6 g of a purified polymer (hereinafter referred to as "polymer D") was obtained.

The intrinsic viscosity [η] of polymer D was 0.27 at 30°C in PBTHF. From the analysis of the NMR spectrum, the molar ratio of PBVE polymerized units: PMMD polymerized units was 68:32. The glass transition temperature of polymer D as measured by DSC, was 114°C, and it was a transparent glassy polymer which was tough at room temperature. Further, the 10% heat decomposition temperature was 447°C, and the refractive index was 1.338.

PREPARATION EXAMPLE 5

8 g of PBVE, 7 g of 2,2-bis(trifluoromethyl)-1,3-dioxol (hereinafter referred to as "HFDD"), 8 g of TFE, 10 g of R225 and 50 mg of perfluorobenzoyl peroxide, was charged into an autoclave made of stainless steel and having an internal capacity of 200 m$\ell$. The interior of the system was frozen in liquid nitrogen, vacuum-deaerated, whereupon solution polymerization was carried out at 70°C for 20 hours, followed by purification. As a result, 4.7 g of a purified polymer (hereinafter referred to as "polymer E") was obtained.

The intrinsic viscosity [η] of polymer E was 0.24 at 30°C in PBTHF. From the analysis of the NMR spectrum, the molar ratio of PBVE polymerized units: HFDD polymerized units:TFE polymerized units was 50:15:35. The glass transition temperature of polymer E as measured by DSC, was 80°C, and it was a transparent glassy polymer which was tough at room temperature. Further, the 10% heat decomposition temperature was 462°C, and the refractive index was 1.338.

PREPARATION EXAMPLE 6

2 g of perfluoro(4-methyl-3-oxa-1,6-heptadiene) and 6.2 mg of diisopropylperoxydicarbonate, were charged into a glass ampule, frozen in liquid nitrogen, vacuum-deaerated and then sealed. After heating at 40°C for 20 hours in an oven, the solidified content was taken out and dried at 200°C for one hour. The resulted polymer was stabilized by fluorination, followed by purification. The yield of the obtained polymer (hereinafter referred to as polymer F) was 99%. The refractive index of the film of polymer F prepared by press molding was 1.328 as measured by Abbe refractometer, and the glass transition temperature as measured by dynamic thermomechanical analysis (DMA), was 124°C.

EXAMPLE 1

Polymer B was put into a cylindrical stainless steel container having an inner diameter of 3.3 cm and melted. At that time, a stainless steel rod having an outer diameter of 1.1 mm was inserted to the center portion, followed by cooling for solidification. The stainless steel rod was withdrawn, and the molded hollow rod (25 cm) of polymer B was taken out from the container. Then, using polymer A, a rod having an outer diameter of 1 mm and a length of 25 cm, was prepared separately and inserted into the hollow rod of polymer B, to obtain a preform comprising a core made of polymer A (refractive index: 1.342) and a clad made of polymer B (refractive index: 1.337).

This preform was sent into a cylindrical electric furnace heated to 240°C at a speed of $v_1$=0.57 mm/min from one end, and a fiber was withdrawn at a speed of $v_2$=10 m/min. At that time, the space between the core and the clad of the preform was slightly vacuumed to a reduced pressure of 94 kPa to bring the core and the clad in close contact with each other. The outer diameter of the fiber thus obtained, was 0.25 mm. The core diameter at that time was about 8 μm from calculation, and the normalized frequency was V=2. 24 to a power source with a wavelength of 1.3 μm, whereby the condition for a single mode was satisfied.

From one end of this fiber, light was permitted to enter by means of a laser diode (hereinafter referred to as LD) having a wavelength of 1.3 μm as a light source, and the intensity distribution of outgoing light was measured by a near field pattern (hereinafter referred to as "NFP") method, whereby the mode field diameter was measured and found to be 10 μm. Further, by a bending method, the cutoff wavelength was measured and found to be 1.25 μm. Further, by a cut-back method, the attenuation loss was measured at a wavelength of 1.3 μm, and found to be 20 dB/km.

EXAMPLE 2

Polymer C was put into a cylindrical stainless steel container having an inner diameter of 3.3 cm and melted. At that time, a stainless steel rod having an outer diameter of 1.1 mm was inserted into the center portion, followed by cooling for solidification. The stainless steel rod was withdrawn, and the molded hollow rod (25 cm) of polymer C was taken out from the container. Then, using polymer A, a rod having an outer diameter of 1 mm and a length of 25 cm, was prepared separately and inserted into the hollow rod of polymer C, to obtain a preform comprising a core made of polymer A (refractive index: 1.342) and a clad made of polymer C (refractive index: 1.338).

This preform was sent into a cylindrical electric furnace heated to 230°C at a speed of $v_1$=0.57 mm/min from one end, and a fiber was withdrawn at a speed of $v_2$=10 m/min. At that time, the space between the core and the clad of the preform was slightly vacuumed to a reduced pressure of 94 kPa to bring the core and the clad in close contact with each other. The outer diameter of the fiber thus obtained, was 0.25 mm. The core diameter at that time was about 8 $\mu$m from calculation, and the normalized frequency was V=2.00 to a light source with a wavelength of 1.3 $\mu$m, whereby the condition for a single mode was satisfied.

From one end of this fiber, light was permitted to enter by means of LD having a wavelength of 1.3 $\mu$m as a light source, and the intensity distribution of outgoing light was measured by NFP method, whereby the mode field diameter was measured and found to be 10 $\mu$m. Further, by a bending method, the cutoff wavelength was measured and found to be 1.2 $\mu$m.

EXAMPLE 3

By means of a screw extruder, double extrusion was carried out at a temperature of from 250 to 270°C so that polymer A (refractive index: 1.342) was located at the center, and polymer D (refractive index: 1.338) was located around it. At that time, the outer diameter of the polymer extruded was 20 mm at the die outlet, and the polymer was drawn to an outer diameter of 0.2 mm to obtain a fiber. The winding up speed of the fiber at that time was 12 m/min. The core diameter at that time was about 8 $\mu$m from calculation, and the normalized frequency was V=2.00 to a light source having a wavelength of 1.3 $\mu$m, whereby the condition for a single mode was satisfied.

From one end of this fiber, light was permitted to enter by means of LD having a wavelength of 1.3 $\mu$m as a power source, and the intensity distribution of outgoing light was measured by NFP method, whereby the mode field diameter was measured and found to be 10 $\mu$m. Further, by a bending method, the cutoff wavelength was measured and found to be 1.2 $\mu$m.

EXAMPLE 4

Using polymer E, a preform comprising a core made of polymer A (refractive index: 1.342) and a clad made of polymer E (refractive index: 1.338), was obtained in the same manner as in Example 1.

This preform was sent into a cylindrical electric furnace heated to 240°C at a speed of $v_1$=0.57 mm/min from one end, and a fiber was withdrawn at a speed of $v_2$=10 m/min. At that time, the space between the core and the clad of the preform was slightly vacuumed to a reduced pressure of 94 kPa to bring the core and the clad in close contact with each other. The outer diameter of the fiber thus obtained, was 0.25 mm. The core diameter at that time was about 8 $\mu$m from calculation, and the normalized frequency was V=2. 00 to a light source with a wavelength of 1.3 $\mu$m, whereby the condition for a single mode was satisfied.

From one end of this fiber, light was permitted to enter by means of LD having a wavelength of 1.3 $\mu$m as a power source, and the intensity distribution of outgoing light was measured by NFP method, whereby the mode field diameter was measured and found to be 10 $\mu$m. Further, by a bending method, the cutoff wavelength was measured and found to be 1.2 $\mu$m.

EXAMPLE 5

Using polymer F, a fiber comprising a core made of polymer A (refractive index: 1.342) and a clad made of polymer F (refractive index: 1.328), was obtained in the same manner as in Example 3. The outer diameter of this fiber was 0.5 mm. The core diameter at that time was 4 $\mu$m, and the normalized frequency was v=1.87 to a light source having a wavelength of 1.3 $\mu$m, whereby the condition for a single mode was satisfied.

From one end of this fiber, light was permitted to enter by means of LD having a wavelength of 1.3 $\mu$m as a power source, and the intensity distribution of outgoing light was measured by NFP method, whereby the mode field diameter was measured and found to be 5 $\mu$m. Further, by a bending method, the cutoff wavelength was measured and found to be 1.1 $\mu$m.

EXAMPLE 6

Using Hiflon AD i.e. a fluoropolymer manufactured by Ausimont, a preform comprising a core made of polymer F (refractive index: 1.328) and a clad made of Hiflon AD (refractive index: 1.325), was obtained in the same manner as in Example 1.

This preform was sent into a cylindrical electric furnace heated to 250°C at a speed of $v_1$=0.57 mm/min from one end, and a fiber was withdrawn at a speed of $v_2$=10 m/min. At that time, the space between the core and the clad of the preform was slightly vacuumed to a reduced pressure of 94 kPa to bring the core and the clad in close contact with each other. The outer diameter of the fiber thus obtained, was 0.25 mm. The core diameter at that time was about 8 $\mu$m from calculation, and the normalized frequency was V=1.72 to a light source with a wavelength of 1.3 $\mu$m, whereby the condition for a single mode was satisfied.

From one end of this fiber, light was permitted to enter by means of LD having a wavelength of 1.3 $\mu$m as a power source, and the intensity distribution of outgoing light was measured by NFP method, whereby the mode field diameter was measured and found to be 10 $\mu$m. Further, by a bending method, the cutoff wavelength was measured and found to be 1.0 $\mu$m.

EXAMPLE 7

Using Hiflon AD and Teflon AF manufactured by Du Pont, a fiber comprising a core made of Hiflon AD (refractive index: 1.325) and a clad made of Teflon AF (refractive index: 1.31), was obtained in the same manner as in Example 3. The outer diameter of this fiber was 0.3 mm. The core diameter at that time was 4 μm, and the normalized frequency was V= 1.92 to a light source having a wavelength of 1.3 μm, whereby the condition for a single mode was satisfied.

From one end of this fiber, light was permitted to enter by means of LD having a wavelength of 1.3 μm as a power source, and the intensity distribution of outgoing light was measured by NFP method, whereby the mode field diameter was measured and found to be 5 μm. Further, by a bending method, the cutoff wavelength was measured and found to be 1.2 μm.

As described in the foregoing, according to the present invention, it is possible to provide a SM plastic optical fiber having a low attenuation loss and a large transmission capacity due to a high bandwidth, which is easy to handle and safe (the optical fiber is free from breakage or sticking) and which is capable of laying for a short distance at a level of a few hundreds meters to a few kilometers with low costs for connection, and a process for its production.

Further, according to the present invention, it is possible to provide a plastic optical fiber which is capable of mutual connection with a SM optical fiber made of glass, and a process for its production. Further, according to the present invention, by employing a non-crystalline fluorine-containing material, particularly a polymer having a fluorine-containing aliphatic cyclic structure, the material distribution can be made smaller than glass and acrylic resin, and it is possible to provide a plastic optical fiber for a higher bandwidth, and a process for its production.

Furthermore, according to the present invention, it is possible to provide a plastic optical fiber which has transparency, heat resistance, moisture resistance, water proof, chemical resistance, non-flammability and flexibility all together and which is suitable particularly for plant wirings or sewage wirings which are required to have chemical resistance, and a process for its production.

**Claims**

1. A plastic optical fiber **characterized by** a core made of a non-crystalline core fluoropolymer having no C-H bond, and a clad made of a clad fluoropolymer having a refractive index lower by at least 0.001 than the core fluoropolymer, and of which the propagation mode is a single mode for near infrared light.

2. The plastic optical fiber according to Claim 1, wherein the relation between $n_1$ and $n_2$ satisfies $0.001 \leqq n_1 - n_2 < 0.01$, where $n_1$ is the refractive index of the core fluoropolymer, and $n_2$ is the refractive index of the clad fluoropolymer.

3. The plastic optical fiber according to Claim 1 or 2, wherein the outer diameter of the plastic fiber is from 100 to 800 μm.

4. The plastic optical fiber according to any one of Claims 1 to 3, wherein the clad fluoropolymer is a non-crystalline fluoropolymer having no C-H bond.

5. The plastic optical fiber according to any one of Claims 1 to 4, wherein the clad fluoropolymer is a fluoropolymer having no C-H bond and having a fluorine-containing aliphatic cyclic structure in its main chain.

6. The plastic optical fiber according to any one of Claims 1 to 5, wherein the core fluoropolymer is a fluoropolymer having a fluorine-containing aliphatic cyclic structure in its main chain.

7. The plastic optical fiber according to any one of Claims 1 to 3, wherein each of the core and clad fluoropolymers is a fluoropolymer having no C-H bond and having a fluorine-containing aliphatic cyclic structure in its main chain.

8. A process for producing a plastic optical fiber as defined in any one of Claims 1 to 7, **characterized by** melting the clad fluoropolymer in a cylindrical container, injecting the core fluoropolymer into a center axis portion of the melt of the clad fluoropolymer, followed by cooling, or preparing a hollow cylinder of the clad fluoropolymer, followed by inserting the core fluoropolymer, to form a preform, and further subjecting this preform to melt spinning.

9. A process for producing a plastic optical fiber as defined in any one of Claims 1 to 7, **characterized by** melt spinning by extrusion so that the core fluoropolymer is disposed at the center and the clad fluoropolymer is disposed concentrically to surround it.

**Patentansprüche**

1. Optische Kunststofffaser, **gekennzeichnet durch** einen Kern, der aus einem nicht-kristallinen Kernfluorpolymer mit keiner C-H-Bindung hergestellt ist, und eine Hülle, die aus einem Hüllenfluorpolymer mit einem Brechungsindex, der um mindestens 0,001 niedriger als der des Kernfluorpolymers ist, hergestellt ist, und wobei die Ausbreitungsmode eine Einzelmode für Nahinfrarotlicht ist.

**2.** Optische Kunststofffaser nach Anspruch 1, wobei die Beziehung zwischen $n_1$ und $n_2$ $0,001 \leqq n_1 - n_2 < 0,01$ genügt, wobei $n_1$ der Brechungsindex des Kernfluorpolymers und $n_2$ der Brechungsindex des Hüllenfluorpolymers ist.

**3.** Optische Kunststofffaser nach Anspruch 1 oder 2, wobei der Außendurchmesser der Kunststofffaser von 100 bis 800 $\mu$m beträgt.

**4.** Optische Kunststofffaser nach einem der Ansprüche 1 bis 3, wobei das Hüllenfluorpolymer ein nichtkristallines Fluorpolymer mit keiner C-H-Bindung ist.

**5.** Optische Kunststofffaser nach einem der Ansprüche 1 bis 4, wobei das Hüllenfluorpolymer ein Fluorpolymer mit keiner C-H-Bindung und mit einer Fluor-enthaltenden aliphatischen cyclischen Struktur in dessen Hauptkette ist.

**6.** Optische Kunststofffaser nach einem der Ansprüche 1 bis 5, wobei das Kernfluorpolymer ein Fluorpolymer mit einer Fluor-enthaltenden aliphatischen cyclischen Struktur in dessen Hauptkette ist.

**7.** Optische Kunststofffaser nach einem der Ansprüche 1 bis 3, wobei jedes der Kem- und Hüllenfluorpolymere ein Fluorpolymer mit keiner C-H-Bindung und mit einer Fluor-enthaltenden aliphatischen cyclischen Struktur in dessen Hauptkette ist.

**8.** Verfahren zur Herstellung einer optischen Kunststofffaser, wie in einem der Ansprüche 1 bis 7 definiert, **gekennzeichnet durch** Schmelzen des Hüllenfluorpolymers in einem zylindrischen Behälter, Einspritzen des Kernfluorpolymers in einen Bereich der Mittelachse der Schmelze des Hüllenfluorpolymers, gefolgt von Kühlen, oder Herstellen eines Hohlzylinders des Hüllenfluorpolymers, gefolgt von einem Einführen des Kernfluorpolymers, um eine Vorform zu bilden, und wobei diese Vorform weiterhin einem Schmefzspinnen unterzogen wird.

**9.** Verfahren zur Herstellung einer optischen Kunststofffaser nach einem der Ansprüche 1 bis 7, **gekennzeichnet durch** Schmelzspinnen mittels Extrusion, so daß das Kernfluorpolymer in der Mitte angeordnet wird und das Hüllenfluorpolymer konzentrisch angeordnet wird, um es zu umhüllen.

**Revendications**

**1.** Fibre optique en matière plastique, **caractérisée par** un coeur constitué d'un fluoropolymère de coeur non-cristallin n'ayant pas de liaison C-H, et d'une gaine constituée d'un fluoropolymère de gaine ayant un indice de réfraction inférieur d'au moins 0,001 à celui du fluoropolymère de coeur, et dont le mode de propagation est un mode unique pour une lumière de l'infrarouge proche.

**2.** Fibre optique en matière plastique selon la revendication 1, dans laquelle la relation entre $n_1$ et $n_2$ satisfait à l'équation $0,001 \leq n_1 - n_2 < 0,01$, où $n_1$ est l'indice de réfraction du fluoropolymère de coeur et $n_2$ est l'indice de réfraction du fluoropolymère de gaine.

**3.** Fibre optique en matière plastique selon la revendication 1 ou 2, dont le diamètre extérieur est de 100 à 800 $\mu$m.

**4.** Fibre optique en matière plastique selon l'une quelconque des revendications 1 à 3, dans laquelle le fluoropolymère de gaine est un fluoropolymère non-cristallin n'ayant pas de liaison C-H.

**5.** Fibre optique en matière plastique selon l'une quelconque de revendications 1 à 4, dans laquelle le fluoropolymère de gaine est un fluoropolymère n'ayant pas de liaison C-H, et ayant une structure cyclique aliphatique fluorée dans sa chaîne principale.

**6.** Fibre optique en matière plastique selon l'une quelconque des revendications 1 à 5, dans laquelle le fluoropolymère de coeur est un fluoropolymère ayant une structure cyclique aliphatique fluorée dans sa chaîne principale.

**7.** Fibre optique en matière plastique selon l'une quelconque des revendications 1 à 3, dans laquelle chacun des floropolymères de coeur et de gaine est un fluoropolymère n'ayant pas de liaison C-H, et ayant une structure cyclique aliphatique fluorée dans sa chaîne principale.

**8.** Procédé de production d'une fibre optique en matière plastique telle que définie dans l'une quelconque des revendications 1 à 7, **caractérisé en ce qu'**il comprend les opérations consistant à faire fondre le fluoropolymère de gaine dans un conteneur cylindrique, à injecter le fluoropolymère de coeur dans une partie d'axe central de la masse fondue du fluoropolymère de gaine, puis à refroidir, ou à préparer un cylindre creux constitué du fluoropolymère de gaine, à insérer le fluoropolymère de coeur pour former une préforme, et à soumettre cette préforme à un filage par fusion.

**9.** Procédé de production d'une fibre optique en matière plastique telle que définie dans l'une quelconque des revendications 1 à 7, **caractérisé en ce qu'**il comprend le filage par fusion par extrusion, de sorte que le fluoropolymère de coeur soit disposé au centre, et le fluoropolymère de gaine soit disposé concentriquement autour de celui-ci.